# EUROPEAN PATENT APPLICATION

(11) **EP 4 332 622 A1**
(43) Date of publication of application: **06.03.2024**
(21) Application number: 23194835.7
(22) Date of filing: 01.09.2023
(51) Int. Cl.: G01S 7/52, G01S 7/539, G01S 15/42, G01S 15/87, G01S 15/931

(54) **OBJECT DETECTION DEVICE**

(30) Priority: 02.09.2022 JP 2022139642
(71) Applicant: Faurecia Clarion Electronics Co., Ltd., Saitama-shi, Saitama 330-0081 (JP)
(72) Inventor: KUROSAWA, Daiki, SAITAMA, 330-0081 (JP); ISHIMOTO, Kaori, Saitama, 330-0081 (JP)
(74) Representative: Lavoix

(57) **Abstract**

To provide an object detecting device that is able to determine whether or not the sense results of an object from ultrasonic sonar are appropriate. An object detecting device (100), includes a learning model storing part (21) that stores a deep learning model created in advance based on measurement data when a first ultrasonic sonar (FML) and second ultrasonic sonar (FMR) that sense an object using ultrasonic waves sense an object with a height lower than a prescribed value and measurement data when the first ultrasonic sonar (FML) and second ultrasonic sonar (FMR) sense an object with a height that is the prescribed value or higher, a sonar data acquiring part (11) that acquires measurement data measured by the first ultrasonic sonar (FML) and second ultrasonic sonar (FMR), and a data determining part (14) that when the measurement data is input to the deep learning model (21), determines whether or not the output from the deep learning model (21) indicates an object with height lower than the prescribed value.

## Description

### TECHNICAL FIELD

The present disclosure relates to an object detecting device.

### BACKGROUND

Technology for training a learning model by labeling the coordinates of an obstacle acquired using LiDAR (Light Detection and Ranging/Laser Imaging Detection and Ranging) at coordinates of the obstacle (object) acquired using ultrasonic sonar for the same obstacle, inputting the learned coordinates of the obstacle acquired using ultrasonic sonar in a learning model, and acquiring the authenticity of these coordinates has been disclosed (for example, see JP2021-527833A).

In the conventional technology described above, it is necessary to provide an expensive LiDAR in addition to the ultrasonic sonar, resulting in high cost. There is a possibility that ultrasonic sonar will mistakenly detect an obstacle with a height that would not collide with the vehicle, such as a curb, as an obstacle with a height that would collide with the vehicle. There is strong demand for development of a technology that can determine whether object sensing results using ultrasonic sonar are appropriate based on measurement data acquired by ultrasonic sonar without using LiDAR.

### SUMMARY

An object of the present disclosure is to provide an object detecting device capable of determining whether the object sensing results using ultrasonic sonar are appropriate.

In order to achieve the object, an object detecting device of the present disclosure includes: a learning model storing part that stores a deep learning model created in advance based on measurement data when ultrasonic sonar that senses an object using ultrasonic waves senses an object with a height lower than a prescribed value and measurement data when the ultrasonic sonar senses an object with a height that is the prescribed height or higher; a sonar data acquiring part that acquires measurement data measured by the ultrasonic sonar; and a data determining part that when the measurement data is input to the deep learning model, determines whether the output from the deep learning model indicates an object with a height lower than the prescribed value.

### EFFECTS OF THE INVENTION

In the object detecting device of the present disclosure configured as described above, measurement data acquired using ultrasonic sonar is input to a deep learning model created by performing deep learning in advance based on measurement data acquired by ultrasonic sonar using an object with a known height. This makes it possible to determine whether the object sensing results using ultrasonic sonar are appropriate.

### BRIEF DESCRIPTIONS OF THE DRAWINGS

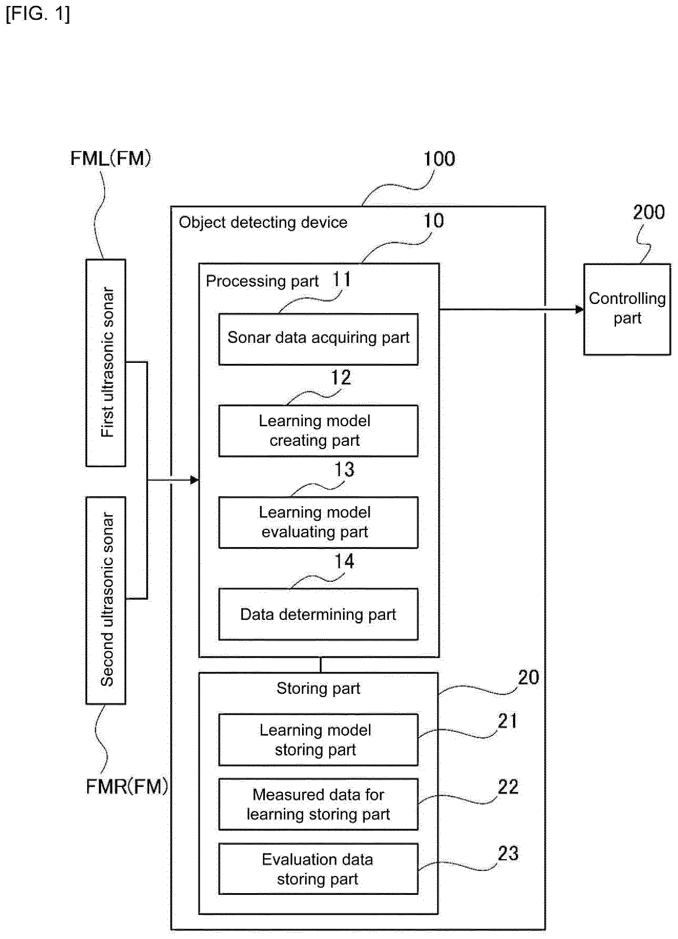

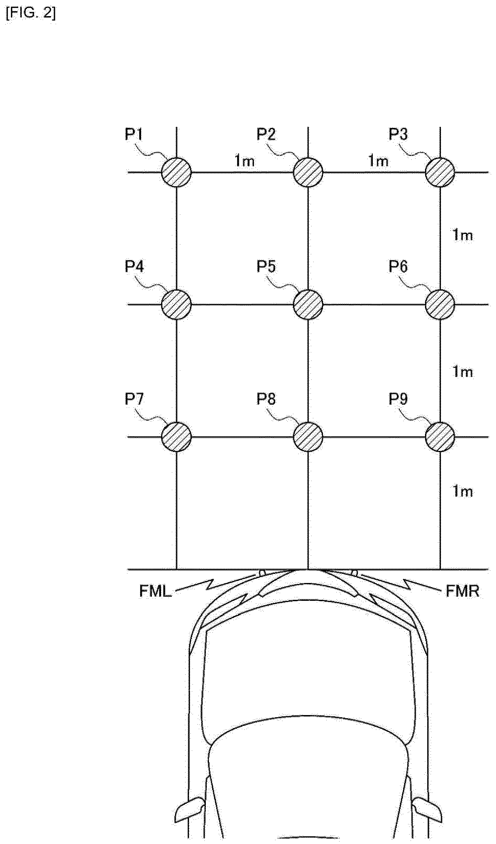

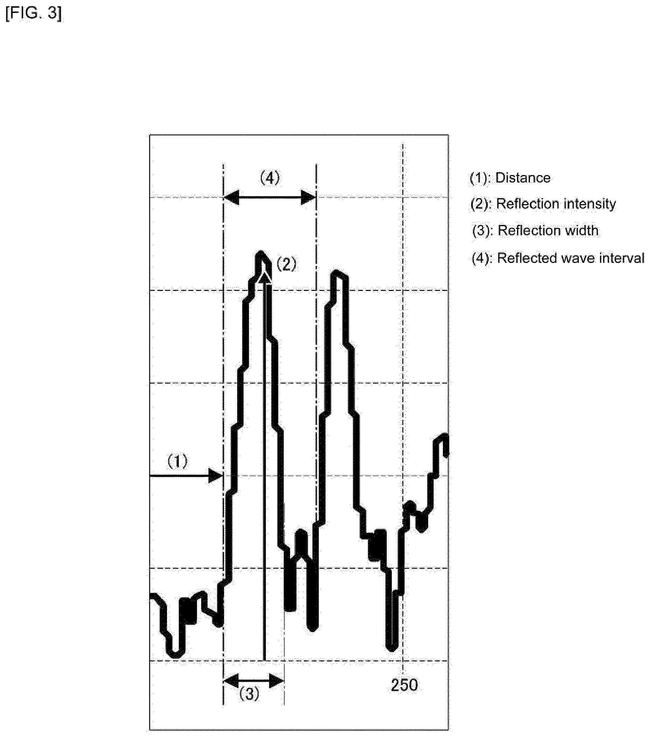

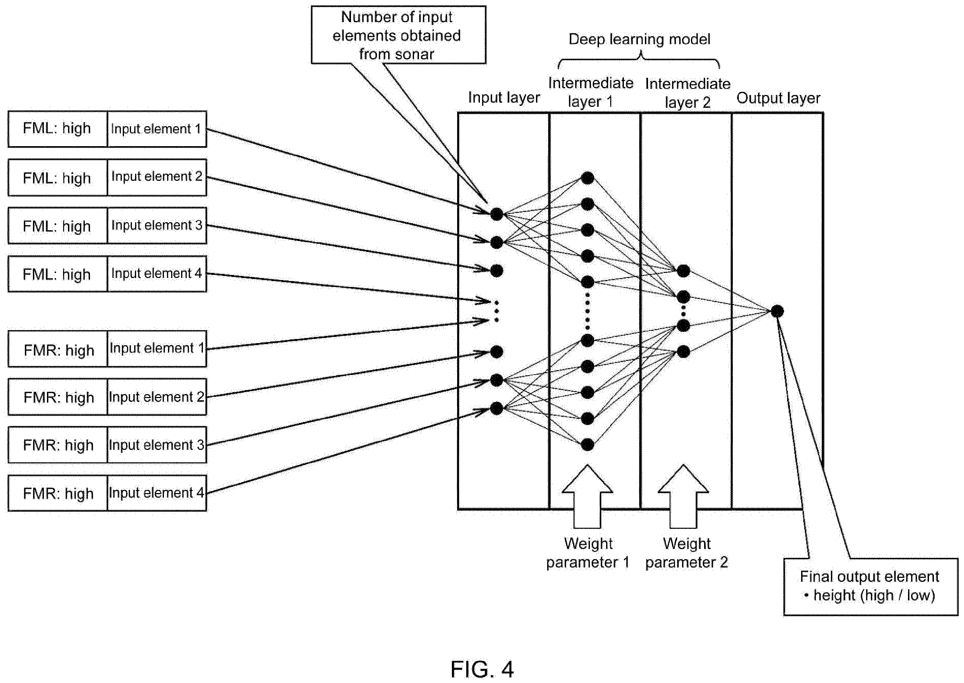

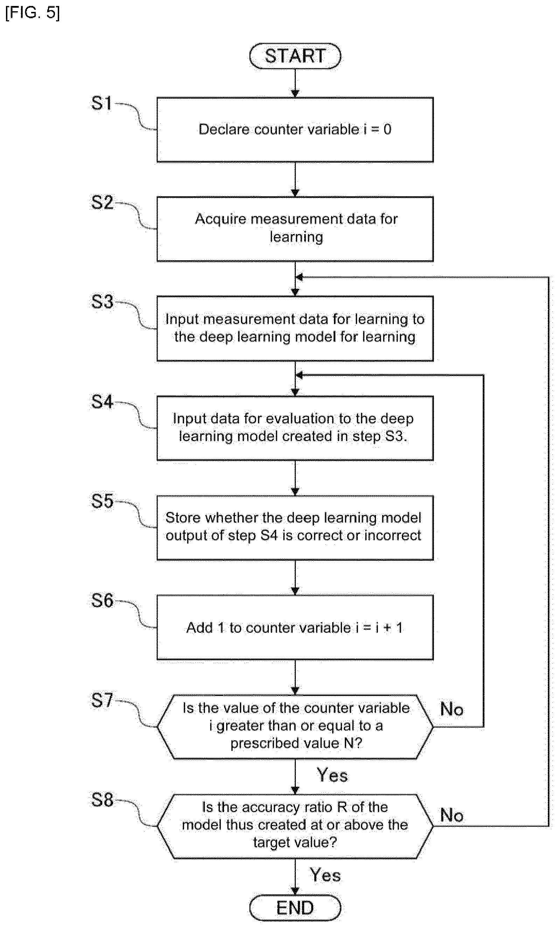

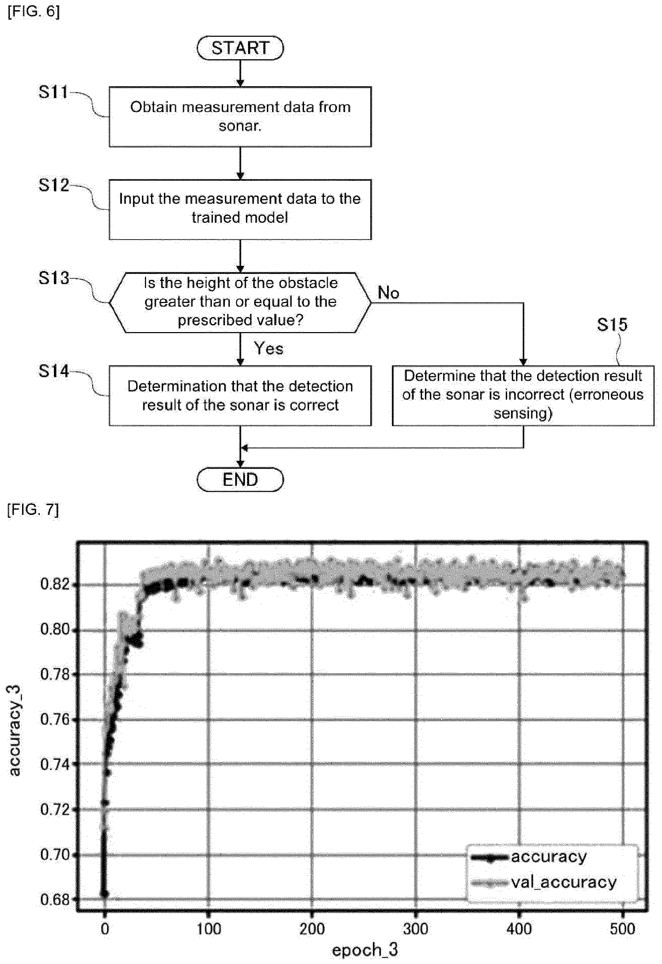

FIG. 1 is a functional block diagram depicting a schematic configuration of an object detecting device according to Embodiment 1. FIG. 2 is an explanatory diagram for describing an obstacle arrangement for collecting measurement data for learning in the object detecting device according to Embodiment 1. FIG. 3 is a diagram depicting an example of a waveform model of a reflected wave acquired by sonar of an object detecting device according to Embodiment 1 and various information obtained from this waveform model. FIG. 4 is a diagram schematically depicting a neural network by which a learning model creating part of the object detecting device according to Embodiment 1 learns through deep learning. FIG. 5 is a flowchart for describing an example of operation during the creation of a deep learning model in the object detecting device according to Embodiment 1. FIG. 6 is a flowchart describing an example of operations during detection of obstacle height using the deep learning model of the object detecting device according to Embodiment 1. FIG. 7 is a graph depicting simulation results when height estimation accuracy ratio exceeds 0.8 (80%) in the object detecting device according to Embodiment 1.

### DETAILED DESCRIPTION

### EMBODIMENT 1

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

The object detecting device according to Embodiment 1 in this disclosure will be described based on the drawings below. FIG. 1 is a functional block diagram depicting a schematic configuration of an object detecting device 100 according to Embodiment 1. The object detecting device 100 in FIG. 1 is an embodiment of the object detecting device according to this disclosure, but this disclosure is not limited to the present embodiment.

The object detecting device 100 is mounted on a moving body such as an automobile. Hereinafter, the moving body that the object detecting device 100 of the present embodiment is mounted on will be referred to as a vehicle.

The object detecting device 100 of the present embodiment is connected to a first ultrasonic sonar FML and a second ultrasonic sonar FMR. The object detecting device 100 of the present embodiment is combined and used with a controlling part 200 that is an external device, but is not limited to this configuration. For example, a vehicle controlling part (vehicle controlling device), or notification part (notification device), or the like can be applied as the controlling part 200. The vehicle controlling part is a device that executes vehicle control processing for supporting parking and driving of the vehicle and is composed of, for example, a vehicle control ECU. The notification part is a device that provides an occupant of the vehicle with warnings and other information by means of notification sounds, notification messages, and the like. The notification part may be provided with a computer including a CPU, RAM, ROM, and the like as well as a monitor, speaker, and the like and may be incorporated in a navigation device that performs route guidance to a target destination.

The controlling part 200 of the present embodiment is an external device but is not limited to this configuration. As a different embodiment, the object detecting device 100 may include a controlling part 200 and be configured to determine whether or not to perform drive control processing and notification processing.

The object detecting device 100 of the present embodiment includes a processing part 10 and a storing part 20, as depicted in FIG. 1. The object detecting device 100 is composed of, for example, an ECU containing a CPU, GPU, RAM, and ROM or another storing device. The processing part 10 is primarily composed of a CPU or the like included in the ECU and controls overall operation of the object detecting device 100 by deploying a prescribed program stored in ROM to RAM and executing the program. The storing part 20 is primarily composed of the storing device included in the ECU but a server or database may be externally provided.

The first ultrasonic sonar FML and second ultrasonic sonar FMR (hereinafter simply called "first sonar FML" and "second sonar FMR" and when not distinguishing left and right, simply called "sonar FM") are devices that detect an obstacle (object) by transmitting ultrasonic waves and receiving the reflected wave of this ultrasonic wave reflected from an object such as an obstacle around the vehicle. The first sonar FML and second sonar FMR output the measurement data related to the received reflected wave to the processing part 10.

The first sonar FML and the second sonar FMR are attached to the front bumper or front grill of the vehicle, as depicted in FIG. 2. The first sonar FML is mounted on the front middle left side of the vehicle, and the second sonar FMR is mounted on the front middle right side of the vehicle.

The ultrasonic sonar mounted on the vehicle is not limited to the first sonar FML and the second sonar FMR. For example, there may be ultrasonic sonar installed side by side facing the rear (reverse direction) of the vehicle, and ultrasonic sonar installed facing the left front, right front, left rear, and right rear of the vehicle.

Ultrasonic sonar transmits ultrasonic waves towards an obstacle and enables sensing of an obstacle by acquiring information such as distance from the vehicle to the obstacle determined based on the elapsed time until the ultrasonic wave reflected by the obstacle is detected, intensity of the reflected ultrasonic wave detected, and relative position as measurement data. The vehicle controlling part controls operation such as automatic parking and emitting an alarm based on the sensed results. At this time, the ultrasonic sonar may sense as an obstacle an uneven road surface, grating, and the like, that is prone to diffuse reflection of ultrasonic waves. However, regarding use of the measurement data acquired by the ultrasonic sonar as-is, it is difficult for the vehicle controlling part to determine whether the measurement data is from an actual reflected wave reflected from the obstacle or measurement data of a reflected wave of a diffused ultrasonic wave.

The object detecting device 100 of the present embodiment uses the measurement data acquired using the sonar FM to perform deep learning and uses the deep learning model thus created to determine whether the height of an obstacle sensed using sonar FM is a prescribed value or more or a prescribed value or lower. Thereby, the object detecting device 100 can determine whether the obstacle sensing results based on the sonar FM are appropriate or not, and can perform object detection more appropriately.

The processing part 10 performs overall control of the object detecting device 100 and determines whether or not the obstacle sensing results using the sonar FM are appropriate. To enable this, the processing part 10 functions as a sonar data acquiring part 11, a learning model creating part 12, a learning model evaluating part 13, and a data determining part 14, as depicted in FIG. 1.

The sonar data acquiring part 11 acquires measurement data from the sonar FM. When creating a deep learning model, the sonar data acquiring part 11 associates measurement data acquired by the sonar FM using an obstacle for learning with a known height with the height of the obstacle (high or low) and stores this in a measured data for learning storing part 22 of the storing part 20 as measurement data for learning. Herein, the sonar data acquiring part 11 stores part of the measurement data for learning associated with the height of the obstacle in the evaluation data storing part 23 of the storing part 20 as evaluation data. The sonar data acquiring part 11 acquires (reads) measurement data for learning from the measured data for learning storing part 22 and creates a learning model. The evaluation data is transferred to the learning model creating part 12, acquired from the evaluation data storing part 23, and transferred to the learning model evaluating part 13.

The sonar data acquiring part 11 acquires measurement data (measurement data for the actual obstacle) from sonar FM when using the deep learning model to sense the obstacle height and transfers this to the data determining part 14.

When creating a deep learning model, an implementer (manufacturer of the object detecting device 100 and the like) who trains the object detecting device 100 uses a plurality of types each of high learning obstacles (samples) and low learning obstacles. At this time, for example, there are preferably two or more types each of high learning obstacles and low learning obstacles. The first sonar FML and the second sonar FMR transmit ultrasonic waves toward each learning obstacle, receive the reflected waves, acquire various types of information regarding the obstacles, and output the information to the sonar data acquiring part 11. The sonar data acquiring part 11 acquires this information as measurement data for learning.

The amount of measurement data for learning to be acquired is not particularly limited. For example, when using two types of high learning obstacles and two types of low learning obstacles, at least 5,000 pieces of measurement data for learning are acquired for each type of learning obstacle, and the total number of pieces of measurement data acquired for learning is preferably at least 20,000. By setting the same number of pieces of measurement data for learning for high learning obstacles and measurement data for learning for low learning obstacles (for example, 5,000 × 2 types = 10,000 each), the performance of the deep learning model can be further improved.

As used herein, "height" is the length of an object in the vertical direction with respect to the road surface, for example, the length along the vertical direction from the road surface to the upper end of the object. Whether the height is "tall" or "low" is determined by whether the obstacle is greater than or equal to a "prescribed value" or less than a "prescribed value". The "prescribed value" is a value at which there is a possibility that an obstacle will collide with the bumper or the like of the vehicle, and can be appropriately set according to the type of vehicle. In this specification, an obstacle that is "at least a prescribed value" and may collide with a bumper or the like is said to have a "high" height, and an obstacle that is "not at least a prescribed value (lower than a prescribed value)" and no possibility of colliding with a bumper or the like is said to be "low" in height.

The learning model creating part 12 uses measurement data for learning input from the sonar data acquiring part 11 when creating the deep learning model, performs deep learning using a neural network, and stores the learned results in a learning model storing part 21 of the storing part 20 as the deep learning model. FIG. 3 is a diagram depicting an example of a waveform model of a reflected wave acquired using sonar FM and various information (measurement data) acquired from this waveform model. In FIG. 3, (1) is the distance to the obstacle, (2) is the reflection intensity, (3) is the reflection width, and (4) is the reflected wave interval, but the acquired information is not limited to these. These pieces of information are input to the deep learning model as input elements.

The learning model evaluating part 13 inputs evaluation data acquired from the evaluation data storing part 23 to the deep learning model created by the learning model creating part 12, and obtains an output result from the deep learning model. The evaluation data (teaching data) in the present embodiment is measurement data appropriately selected from measurement data for learning with regards to learning obstacles acquired by the sonar FM when a deep learning model as described above is created. However, the data is not limited to this, and separately acquired measurement data can also be used.

If the output result obtained from the deep learning model is correct, the learning model evaluating part 13 stores in the learning model storing part 21 that the answer is correct, and stores incorrect if the output result is incorrect. For example, when the evaluation data is measurement data indicating that "the height of the obstacle is a prescribed value or more", the learning model evaluating part 13 determines that the output from the deep learning model is "correct" if the output therefrom is "height of obstacle is the prescribed value or more". On the other hand, the learning model evaluating part 13 determines that the output is "incorrect" if the output is "the height of the obstacle is not equal to or greater than the prescribed value".

The creation of the deep learning model by the learning model creating part 12 and the evaluation by the learning model evaluating part 13 are preferably repeated a prescribed number of times. Calculating the accuracy ratio of the output from the deep learning model and repeating the processing until this accuracy reaches a prescribed accuracy is more desirable. The prescribed number of repetitions is not particularly limited, but is preferably 100 times or more, more preferably 200 times or more, even more preferably 300 times or more, and most preferably 500 times or more. The accuracy ratio is not particularly limited, but is preferably 0.8 (80%) or more.

The data determining part 14 inputs measurement data input from the sonar data acquiring part 111 [sic] into the deep learning model stored in the learning model storing part 21 when an obstacle is actually detected. Based on this input, the deep learning model outputs either "the height of the obstacle is greater than or equal to a prescribed value" or "the height of the obstacle is not greater than or equal to a prescribed value (lower than a prescribed value)".

The data determining part 14 determines whether the obstacle sensing result by the sonar FM is correct (appropriate) based on the output from the deep learning model. More specifically, the data determining part 14 determines that the obstacle sensing result by sonar FM is "correct" when the output from the deep learning model is "the height of the obstacle is equal to or greater than the prescribed value". On the other hand, the data determining part 14 determines that the obstacle sensing result by sonar FM is "incorrect (erroneous sensing)" when the output is "the height of the obstacle is not equal to or greater than the prescribed height". The reason is that the sonar FM senses an object with a "height" greater to the prescribed value or more as an obstacle and cases where the sensed obstacle is determined to be "low" by the deep learning model are considered to be based on the sonar FM inadvertently sensing the obstacle as "high" from diffuse reflection of a grating or the like. The data determining part 14 outputs measurement data (obstacle sensing results) together with determination results to the controlling part 200.

The data determining part 14 may be configured to output the measurement data together with the determination results (or instead of the determination results) to the controlling part 200 only when the determination results are "correct". On the other hand, when the determination result is "incorrect (erroneous sensing)", the data determining part 14 may be configured to discard the determination results and measurement data without outputting the results to the controlling part 200.

The storing part 20 temporarily or non-temporarily stores various data and parameters used in various operations of the processing part 10. Furthermore, as described above, the learning model storing part 21 of the storing part 20 stores measurement data for learning when the sonar FM senses an obstacle whose height is lower than a prescribed value and temporarily or non-temporarily stores the deep learning model created in advance in the learning model creating part 12 based on the measurement data for learning when an obstacle with a height greater than or equal to the prescribed value is sensed. The measurement data for learning is temporarily or non-temporarily stored in the measured data for learning storing part 22 and the evaluation data is temporarily or non-temporarily in the evaluation data storing part 23.

The controlling part 200 determines whether or not to perform a prescribed process based on the determination results input from the data determining part 14 of the processing part 10. The controlling part 200 determines to perform a prescribed process based on the measurement data when the determination result is "correct", and not to perform the prescribed process when the determination result is "incorrect (erroneous sensing)".

When the controlling part 200 is a vehicle controlling part, the controlling part 200 executes vehicle control such as obstacle avoidance, deceleration, and stopping of the vehicle when the determination result is "correct", and when the determination result is "incorrect (erroneous sensing)", vehicle control is not executed. When the controlling part 200 is a notification part, the controlling part 200 executes output control of a notification sound or notification message for notifying the occupant that an obstacle has been sensed when the determination result is "correct" and does not execute output control when the determination result is "incorrect (erroneous sensing)".

An example of operation of the object detecting device 100 according to Embodiment 1 configured as described above will be described below with reference to the flow charts of FIG. 5 and FIG. 6.

An example of the operation when the object detecting device 100 according to Embodiment 1 creates a deep learning model will be described as follows. This deep learning model is executed by, for example, a vehicle manufacturer, but is not limited to this.

When creating a deep learning model, the implementer first prepares four types of obstacles with different heights, that is, two types of learning obstacles with high height and two types of learning obstacles with low height. The implementer has the first sonar FML and the second sonar FMR acquire measurement data for learning for each of the obstacles for learning. At this time, the implementer places obstacles for learning within a range that can be stably sensed by the first sonar FML and second sonar FMR, specifically within a range of 3 m to 4 m from the vehicle. Furthermore, the implementer has the first sonar FML and the second sonar FMR acquire measurement data for learning on a flat road surface and in an environment that is less susceptible to wind, vibration, and the like, so as to eliminate errors in estimation due to disturbances. As a result, the first sonar FML and the second sonar FMR can acquire measurement data for learning with higher accuracy.

In the present embodiment, as depicted in FIG. 2, the implementer installs one type of obstacle at a plurality of different positions, and measures the reflected waves at each position using the first sonar FML and the second sonar FMR. For example, the implementer installs a pole at P1 as one of the obstacles having a height equal to or greater than a prescribed value, has the first sonar FML and the second sonar FMR acquire reflected waves as measurement data for learning, and stores this in the object detecting device 100 as measurement data for learning. The body detecting part 100 [sic] also stores reflected waves measured by the first sonar FML and the second sonar FMR with the pole installed at P2 as measurement data for learning. In this same manner, the first sonar FML and the second sonar FMR measure the reflected waves of a pylon other than the pole as an obstacle having a height higher than the prescribed value, and the object detecting device 100 stores the reflected waves as measurement data for learning. In addition, in a similar manner, the first sonar FML and the second sonar FMR measure reflected waves from gratings and curbs as obstacles having a height that is lower than the prescribed value. In this manner, the implementer places one type of obstacle at a plurality of different positions (for example, P1 to P9), has the first sonar FML and the second sonar FMR measure the reflected waves, and stores this in the object detecting device 100 as data for learning. P1 to P9 are provided at intervals of 1 m in front of the vehicle, with the central front end of the bumper of the vehicle, for example, as a reference (origin). The implementer has the first sonar FML and the second sonar FMR acquire measurement data for learning 5,000 times for each of the four types of obstacles for learning, to acquire a total of 20,000 pieces of measurement data for learning.

The sonar data acquiring part 11 associates (labels) the 20,000 pieces of measurement data for learning acquired from the first sonar FML and second sonar FMR with obstacle height (high or low), and stores this in the storing part 20. At this time, the sonar data acquiring part 11 randomly selects, for example, 75% (15,000) pieces of the measurement data from the measurement data for learning as measurement data for learning to be used for deep learning and stores this in the measured data for learning storing part 22. The sonar data acquiring part 11 stores the remaining 25% (5,000 pieces) of measurement data for learning in the evaluation data storing part 23 as evaluation data (teaching data) for evaluating the performance of the deep learning model.

A procedure (operation) for creating a deep learning model by the object detecting device 100 using the measurement data for learning acquired in this manner will be described as follows with reference to the flowchart depicted in FIG. 5. It is assumed that the number of nodes of the first intermediate layer (middle layer 1) and the second intermediate layer (middle layer 2) are set to a prescribed number when the operation of the flowchart depicted in FIG. 5 is started. For example, the first intermediate layer extracts and diffuses more features from the input elements input from the input layer, and sets the number of nodes according to the diffusion result. The second intermediate layer selects features related to the height of obstacles from the features extracted in the first intermediate layer and narrows down the number of features (the number of nodes) to less than the number of input elements. In addition, a weight parameter 1 and a weight parameter 2 used for weighting are set in advance for the first intermediate layer and the second intermediate layer.

In S1 (step 1), the learning model evaluating part 13 sets 0 to the counter variable i in order to declare the counter variable i. In the next step S2, the sonar data acquiring part 11 acquires the measurement data for learning from the measured data for learning storing part 22 and sequentially transfers the data to the learning model creating part 12.

In the next step S3, the learning model creating part 12 inputs the measurement data for learning to the deep learning model provided in the learning model storing part 21. The input elements are information such as distance, reflection intensity, reflection width, and reflected wave interval acquired by each of the first sonar FML and the second sonar FMR and the height (high or low) of the acquired obstacles is labeled and input to the deep learning model. In the present embodiment, the deep learning model receives input of 15,000 measurement data for learning stored in the measured data for learning storing part 22 and executes deep learning.

FIG. 4 is a diagram schematically depicting a neural network configuration for training deep learning by the learning model creating part 12. As depicted in FIG. 4, the input elements 1, 2, 3, 4... in the input layer corresponding to the first sonar FML and the input elements 1, 2, 3, 4... corresponding to the second sonar FMR are input. Since FIG. 4 indicates examples of measurement data using learning obstacles with high height, each input element is labeled "high" and input to the input layer. The first intermediate layer extracts and diffuses a lot of features from input elements input from the input layer and the second intermediate layer selects features from these extracted features related to the height of the obstacles and narrows down the number of features to less than that of the input elements. The output layer outputs either "high" (for example "1") or "low" (for example "0") as an output element.

In the next S4, the learning model evaluating part 13 inputs evaluation data to the deep learning model created in S3. The evaluation data are 5,000 pieces of teaching data where the correct answers are known in advance, and are acquired by the sonar data acquiring part 11 from the evaluation data storing part 23 and transferred to the learning model evaluating part 13. This evaluation data is different from the measurement data for learning used in S3, and only input elements such as distance, reflection intensity, reflection width, and reflected wave interval are input to the deep learning model, and height is unknown in the deep learning model. For this input, the deep learning model outputs either "high" or "low".

In the next S5, the learning model evaluating part 13 compares the output result acquired from the deep learning model by inputting the evaluation data and the answer known in advance, and determines whether the answer is correct or incorrect. Furthermore, the learning model evaluating part 13 accumulates data of correct answers and incorrect answers by storing whether the output was correct or incorrect in the storing part 20.

As a specific determination procedure, for example, when the measurement data indicates "height of obstacle is the prescribed value or higher" and the output is "high", the learning model evaluating part 13 determines the answer to be correct. In contrast, if the output is "low" (obstacle height is not the prescribed value or higher), the learning model evaluating part 13 determines the answer to be incorrect. On the other hand, when the evaluation data is measurement data indicating "height of obstacle is not the prescribed value or higher" (low) and the output is "low", the learning model evaluating part 13 determines the answer to be correct. In contrast, if the output is "high", the learning model evaluating part 13 determines the answer to be incorrect.

After all the correct or incorrect answers have been determined and stored for the prescribed evaluation data, the program proceeds to S6, and the learning model evaluating part 13 adds 1 to the counter variable i (i=i+1). In the next S7, the learning model evaluating part 13 determines whether or not the counter variable i is equal to or greater than a prescribed learning number N (N is a natural number). This prescribed number of times of learning N is a sufficient number of times of learning to calculate the accuracy ratio, and the deep learning model performs learning for this number of times. In the present embodiment, the prescribed number of times of learning N is 500 times (N=500).

If it is determined in S7 that the counter variable i is not equal to or greater than the prescribed value N (No), the program returns to S4 and repeats the processes of S4 to S6. In contrast, if it is determined that the counter variable i is equal to or greater than the prescribed value N (Yes), the program proceeds to S8.

In S8, the learning model evaluating part 13 calculates the accuracy ratio R of the created model based on the accumulated correct and incorrect answer data, for example, using the following formula and determines whether or not the accuracy ratio R is at or above the prescribed target value. In the present embodiment, the prescribed target value is 0.8 (80%) or higher.

Accuracy ratio R = number of times the output of the deep learning model was determined to be correct / number of times evaluation data was input to the deep learning model.

When it is determined in S8 that the accuracy ratio R is equal to or higher than the target value (Yes), the program proceeds to the end, and the creation of the deep learning model is completed. When it is determined that the accuracy ratio R is not equal to or greater than the target value (No), the program returns to S3 and causes the deep learning model to execute further learning. The learning model creating part 12 can improve the learning performance of the deep learning model by appropriately changing the weight parameter 1 of the first intermediate layer and the weight parameter 2 of the second intermediate layer for learning.

FIG. 7 is a graph depicting simulation results when the accuracy ratio of height estimation exceeds 0.8 (80%). The horizontal axis of the graph depicted in FIG. 7 is the number of times of learning, and the vertical axis is the accuracy ratio. As can be seen from FIG. 7, the correct answer ratio (R) exceeds 0.8 (80%) when the learning number of times (N) reaches 100 times, and when the learning number of times increases to 200 times and 300 times, the accuracy ratio stabilizes to around 0.83 (83%). From the above, setting the learning number of times to roughly 500 further stabilizes the accuracy ratio of the deep learning model and enables a more accurate output of whether or not the obstacle height is higher than the prescribed value.

An example of the operation when the object detecting device 100 detects height of an obstacle using the deep learning model created in the manner described above is described below based on the flowchart of FIG. 6. The operation depicted in the flowchart of FIG. 6 starts when the user drives the vehicle.

In S 11, the sonar data acquiring part 11 acquires measurement data when the first sonar FML and second sonar FMR sense a prescribed obstacle. Examples of obstacles to be actually measured include: poles, pylons, and the like, as obstacles with a height higher than the prescribed value, and curbs, gratings, and the like, as obstacles with a height lower than the prescribed value. The sonar data acquiring part 11 transfers the acquired measurement data to the data determining part 14.

In the next S12, the data determining part 14 inputs information (input elements) extracted from the obtained measurement data to the deep learning model. The deep learning model outputs "high" (for example, "1") if the height of the obstacle is determined to be the prescribed value or higher based on each piece of information of input measurement data. The deep learning model outputs "low" (for example "0") if the height of the obstacle is determined to not be the prescribed value or higher.

In the next S13, the data determining part 14 determines whether or not the output from the deep learning model is "the height of the obstacle is the prescribed value or higher". When the output from the deep learning model is (Yes) "the height of obstacle is the prescribed value or higher" (high), the program proceeds to S14 and if the output is (No) "height of obstacle is not prescribed value or higher" (low), the program proceeds to S15.

In S14, the data determining part 14 determines the obstacle sensing result by the sonar FM to be correct. On the other hand, in S15, the data determining part 14 determines the obstacle sensing result by the sonar FM to be incorrect (erroneous sensing).

By proceeding to the end of the program, the operation of the object detecting device 100 for a single piece of measurement data is completed. The object detecting device 100 executes processes S11 to S15 for each sensing of the obstacle by the sonar FM and determines whether or not the obstacle sensing result by the sonar FM is correct.

In addition, the data determining part 14 outputs the determination results and measurement data obtained in S14 and S15 to the controlling part 200, which is an external device. If the controlling part 200 is a vehicle controlling part, as described above, the controlling part 200 determines whether or not to use the obstacle sensing result from the sonar FM for vehicle control based on the determination result. For example, when the determination result is "correct", the obstacle sensing result from sonar FM is correct, so the controlling part 200 can determine to use the obstacle sensing result for vehicle control. On the other hand, when the determination result is "not correct (erroneous sensing)", the obstacle sensing result from sonar FM is not correct so the controlling part 200 can determine not to use the obstacle sensing result for vehicle control.

If the controlling part 200 is a notification part, the controlling part 200 can determine whether or not to notify the occupant of the sensing of an obstacle based on the determination results. For example, if the determination result is "correct", the obstacle sensing results from the sonar FM are correct so the controlling part 200 can notify the occupant there is an obstacle. On the other hand, if the determination results are not correct (erroneous sensing), the obstacle sensing result from the sonar FM is not correct so the controlling part 200 can determine not to notify the occupant that there is an obstacle.

As described above, the object detecting device 100 of the present embodiment has measurement data of sonar FM actually sensing an obstacle input to a deep learning model created in advance based on measurement data for when sonar FM senses an obstacle (object) with a height lower than a prescribed value and measurement data for sensing an object with a height at or above the prescribed value. The object detecting device 100 determines whether or not the output from the deep learning model is an object with a height lower than the prescribed value. This enables the object detecting device 100 to determine whether or not the object sensing result from the sonar FM is appropriate. When sensing an obstacle using sonar FM, the object detecting device 100 can reduce sensing of obstacles at a height that will not collide with the vehicle such as a curb or grating as an obstacle with a height that will collide with the vehicle. The object detecting device 100 can more quickly and appropriately control the vehicle and notify the occupants based on the height determination results.

The object detecting device 100 can sense height of an obstacle based on measurement data from the sonar FM and determine whether or not the object sensing results from sonar FM are appropriate. Therefore, the object detecting device 100 does not require use of image recognition, LiDAR, or the like, reducing manufacturing costs and the like, and can exhibit a superior object detection function whether it is night or day. The object detecting device 100 outputs whether the object height is high or low (1 or 0) using a deep learning model so height determination can be performed with better precision and accuracy.

An embodiment of the present disclosure has been described in detail with reference to the drawings, but the specific configuration is not limited to this embodiment and design changes to a degree that do not deviate from the gist of the present disclosure are included in the present disclosure.

The object detecting device 100 of the embodiment described above is configured to learn using measurement data from a first sonar FML and second sonar FMR mounted to the left and right of center on the front of the vehicle and determine sensing results, but the present disclosure is not limited to this configuration. The object detecting device 100 simply needs to perform learning using measurement data of a pair of sonar having measurement areas that overlap over a prescribed range and a configuration where learning is performed using measurement data from a pair selected from a plurality of sonar or from a plurality of pairs of sonar is feasible. This manner of configuration enables the object detecting device 100 to determine whether or not the object sensing result by each sonar is correct and enables performing object sensing in various directions with higher accuracy not just in front of the vehicle.

In the object detecting device 100 of the embodiment described above, the processing part 10 is provided in a single ECU but is not limited to this configuration and can be provided separately in different ECUs. A part or all of the functions of the object detecting device 100 can be implemented using hardware such as FPGA or ASIC. The object detecting device 100 can have a configuration where the processing part 10 and the controlling part 200 are provided in a single ECU or the like.

The object detecting device 100 may create a deep learning model for each vehicle or may create a deep learning model that matches the conditions for each vehicle. The object detecting device 100 can create a deep learning model on a prescribed vehicle according to the model and this deep learning model thus created can be installed on a plurality of vehicles of the same model. This enables a more efficient implementation of the present disclosure.

### DESCRIPTION OF REFERENCE NUMERAL

11. Sonar data acquiring part
14. Data determining part
21. Learning model storing part
100. Object detecting device
200. Controlling part
FML. First ultrasonic sonar
FMR. Second ultrasonic sonar

## Claims

1. An object detecting device, comprising:
a learning model storing part (21) that stores a deep learning model created in advance based on measurement data when ultrasonic sonar that senses an object using ultrasonic waves senses an object with a height lower than a prescribed value and measurement data when the ultrasonic sonar senses an object with a height that is the prescribed or higher;
a sonar data acquiring part (11) that acquires measurement data measured by the ultrasonic sonar; and
a data determining part (14) that when the measurement data is input to the deep learning model (21), determines whether the output from the deep learning model indicates an object with a height lower than the prescribed value.

2. The object detecting device according to claim 1, further comprising a controlling part (200) that determines that prescribed processing based on measurement data is not performed when the output from the deep learning model indicates the object height is lower than the prescribed value, and determines that prescribed processing based on the measurement data is performed when the output indicates the object height is the prescribed value or higher.

3. The object detecting device according to claim 2, wherein the controlling part (200) is the vehicle controlling part that performs processing for controlling the vehicle.

4. The object detecting device according to claim 2, wherein the controlling part (200) is a notification part that provides notification to the occupant of an object detected around the vehicle.

5. The object detecting device according to any one of claims 1 to 4, wherein upon input of the measurement data, the deep learning model outputs determination results of whether or not the height of the object corresponding to the measurement data is lower than the prescribed value.
